(19) **Europäisches Patentamt**
**European Patent Office**
**Office européen des brevets**

(11) Publication number: **0 242 396 B1**

(12) # EUROPEAN PATENT SPECIFICATION

(45) Date of publication of patent specification:
**13.03.91 Bulletin 91/11**

(51) Int. Cl.⁵: **G01P 9/04, G01P 15/10**

(21) Application number: **86906650.6**

(22) Date of filing: **20.10.86**

(86) International application number:
**PCT/US86/02221**

(87) International publication number:
**WO 87/02468 23.04.87 Gazette 87/09**

(54) **SYNCHRONOUS FM DIGITAL DETECTOR.**

(30) Priority: **21.10.85 US 789547**

(43) Date of publication of application:
**28.10.87 Bulletin 87/44**

(45) Publication of the grant of the patent:
**13.03.91 Bulletin 91/11**

(84) Designated Contracting States:
**CH DE FR GB LI**

(56) References cited:
**US-A- 3 842 681**
**US-A- 4 215 570**
**US-A- 4 386 535**
**US-A- 4 510 802**
**US-A- 4 590 801**

(73) Proprietor: **SUNDSTRAND DATA CONTROL, INC.**
**15001 N.E. 36th Street P.O. Box 97001**
**Redmond, WA 98073-9701 (US)**

(72) Inventor: **PETERS, Rex, B.**
**17100 - 199th Place N.E.**
**Woodinville, WA 98072 (US)**

(74) Representative: **Marshall, John Grahame**
**SERJEANTS 25 The Crescent King Street**
**Leicester LE1 6RX (GB)**

## Description

Technical Field

The present invention relates to synchronous FM digital detectors. Such detectors are particularly suited for use in inertial navigation systems in connection with vibrating beam accelerometers for measuring angular rate.

Background of the Invention

In one known type of inertial navigation system, angular rate of rotation about a given coordinate axis is measured by moving an analog accelerometer along an axis normal to the accelerometer's sensitive axis and normal to the axis about which rotation is to be measured. For example, consider a set of X, Y and Z coordinate axes fixed in a body whose rotation rate is to be measured and an accelerometer also fixed in the body and having its sensitive axis aligned along the Z axis. If the angular rotation vector of the body includes a component along the X axis, then periodic motion of the accelerometer along the Y axis will result in a periodic Coriolis acceleration acting in the Z direction that will be sensed by the accelerometer. the magnitude of the Coriolis acceleration is proportional to the rotation rate about the X axis. As a result, the output of the accelerometer (typically a current signal) includes a DC or slowly changing component that represents the linear acceleration of the body along the Z axis and a periodic component that represents the rotation of the body about the X axis. The accelerometer output can be processed, along with the outputs of accelerometers that have their sensitive axes in the X and Y directions and that are moved along the Z and X axes, respectively, to yield linear acceleration and angular rate about the X, Y and Z axes. Such signal processing is described in U.S. Patents 4590801 (published 27.5.86) and 4510802.

In the past, inertial navigation systems of the type described above have employed accelerometers that produce an analog output signal, such as current signal, having a magnitude proportional to the sensed acceleration. A second known type of accelerometer produces an output signal that has a frequency related to the sensed acceleration. An example of such a frequency output accelerometer is a vibrating beam accelerometer. In a vibrating beam accelerometer, a proof mass is supported by a flexure hinge or the like and by a vibrating beam force sensing element that extends along the accelerometer's sensitive axis. The force sensing element is coupled to a drive circuit that causes the force sensing element to vibrate at its resonant frequency. An acceleration along the sensitive axis causes the proof mass to exert a tension or compression force on the force sensing element. In a manner analogous to a vibrating string, a tension force on the force sensing element causes its resonant frequency to rise, while a compression force on the force sensing element causes its resonant frequency to decrease. The force sensing element can therefore be operated as a force-to-frequency converter that frequency modulates an acceleration signal onto a carrier signal, the carrier signal being the zero acceleration resonant frequency of the force sensing element.

One advantage of vibrating beam accelerometers is the fact that their output signals are inherently digital, and may therefore be conveniently integrated into a microprocessor based inertial navigation system. The use of vibrating beam accelerometers as angular rate sensors, however, requires that a technique be developed for processing the output signals so that accelerations resulting from Coriolis accelerations are separated from linear accelerations of the body in which the accelerometer is housed.

Summary of the Invention

The invention provides a system for determining the angular rate of rotation of a body about a rate axis, comprising at least one accelerometer having its sensitive axis parallel to a sensing axis perpendicular to the rate axis and including means for producing an output signal having a frequency corresponding to the acceleration experienced by the accelerometer along its sensitive axis ; and movement means including means for producing a periodic movement signal and means responsive to that movement signal for periodically moving the accelerometer along a movement axis perpendicular to the rate and sensing axes, whereby the output signal includes a periodic Coriolis component. The system according to the invention processes the output signal from the accelerometer by means of processing means which comprise means for producing a reference signal that is operative to define one or more first time periods during which the Coriolis component has one polarity and one or more second time periods during which the Coriolis component has the opposite polarity. The first and second time periods together comprising one or more complete periods of the movement signal ; means for determining, for the output signal, a phase value representing the difference between the phase change of the output signal during the first time periods and the phase change of the output signal during the second time

EP 0 242 396 B1

periods ; means for improving the resolution of the phase value determination comprising means for generating a high frequency clock signal, and counter means for counting cycles of the clock signal during fractions of a cycle of an output signal which overlaps the first and second time periods thereby to improve the resolution of determination of phase values ; and means for determining from the phase values a value representing the angular rate of rotation of the body about the rate axis.

By determining the difference between the phase change of the input signal during the first time periods and the phase change of the input signal during the second time periods, the phase value determining means is able to determine the amplitude of the information signal. The phase value determining means may comprise counter means operative to determine the difference between the cycles of the input signal that occur during the first time periods and the cycles of the input signal that occur during the second time periods.

Advantageously the system comprises first and second accelerometers which have their sensitive axes parallel to the sensing axis that is in turn perpendicular to the rate axis. The first and second accelerometers are adapted to produce respective first and second output signals, each output signal having a frequency corresponding to the acceleration experienced by the respective accelerometer along its sensitive axis. In such a configuration, the processing means includes phase value determining means for the output signals of each of the accelerometers.

Brief Description of the Drawings

FIGURE 1 is a partial schematic view of an inertial navigation system according to the present invention ;
FIGURE 2 is a schematic view of two vibrating beam accelerometers having their sensitive axes antiparallel to one another ;
FIGURE 3 is a graph illustrating selection of the first and second half periods of the vibration period ;
FIGURE 4 is a conceptual view illustrating the demodulation of the output signals and the combination of the demodulated signals to produce $\Delta\Phi$ and $\Sigma\Phi$ ;
FIGURE 5 is a block diagram of a system for determining the angular rate from the accelerometer output signals ;
FIGURE 6 illustrates means for increasing the frequencies of the output signals ; and,
FIGURES 7A and 7B illustrate an interpolation technique for measuring fractional periods of the output signals.

Detailed Description

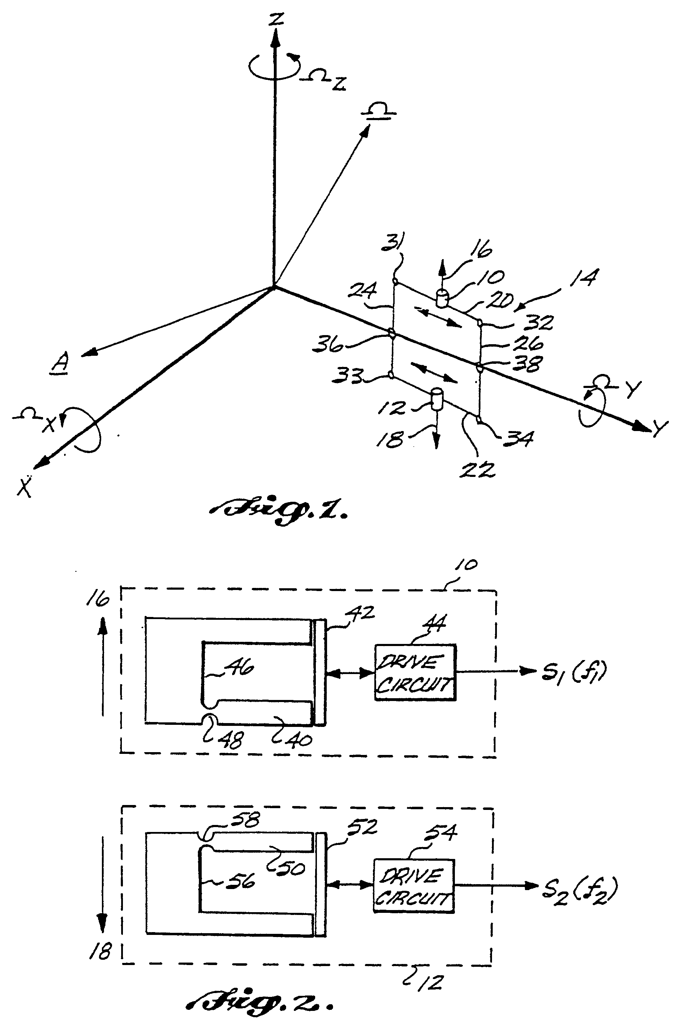

The principles of the invention are disclosed, by way of example, by the inertial navigation system schematically illustrated in FIGURE 1. Coordinate axes X, Y and Z are fixed in the body whose linear acceleration and rotation rates are to be measured. The angular rotation rate of the body is defined by the vector $\underline{\Omega}$, and the linear acceleration or specific force acting on the body is defined by vector $\underline{A}$. In general, both $\underline{\Omega}$ and $\underline{A}$ vary with time, and may be expressed as :

$$\underline{\Omega} = \Omega_x\underline{i} + \Omega_y\underline{j} + \Omega_z\underline{k} \quad (1)$$

$$A = {}_x\underline{i} + A_y\underline{j} + A_z\underline{k} \quad (2)$$

where $\underline{i}$, and $\underline{k}$ are unit vectors pointing along the X, Y and Z axes, respectively.

The inertial navigation system of FIGURE 1 includes vibrating beam accelerometers 10 and 12 supported in mounting system 14. The accelerometers are mounted in a "back-to-back" configuration, with sensitive axis 16 of accelerometer 10 directed in a positive direction along the Z axis, and sensitive axis 18 of accelerometer 12 directed in a negative direction along the Z axis. Mounting system 14 is a parallelogram arrangement that includes support members 20 and 22 that are parallel to the Y axis and that are connected to a pair of linkage members 24 and 26 through pivots 31-34. Linkage members 24 and 26 are in turn mounted to a suitable support structure at central pivots 36 and 38. Support members 20 and 22 are connected to a suitable drive mechanism that periodically (e.g., sinusoidally) vibrates linkage members 24 and 26 about central pivots 36 and 38, thereby vibrating the support members and accelerometers along the Y axis. The vibratory motion of accelerometer 10 is 180° out-of-phase with the vibratory motion of accelerometer 12, e.g., when accelerometer 10 is moving in the positive Y direction, accelerometer 12 is moving at the same speed in the negative Y direction. A suitable apparatus for implementing the parallelogram structure shown in FIGURE 1 is described in U.S. Patent No. 4,510,802.

3

It is to be understood that the present invention is not limited to the back-to-back arrangement shown in FIGURE 1, but instead is applicable to all arrangements in which one or more accelerometers are vibrated along an axis normal to the sensitive axis or rotated in a plane normal to the sensitive axis. A number of such arrangements are described in the United States Patent No. 4,445,376 and US Patent 459 080 published 27.5.86.

The periodic vibration of accelerometers 10 and 12 along the Y axis interacts with rotation rate of the body about the X axis to produce Coriolis forces acting along the Z direction. The output of each accelerometer 10 and 12 therefore includes a component $A_z$ resulting from linear acceleration of the body along the Z axis, and a second component proportional to a rotation rate $\Omega_z$. Separation of the linear acceleration signal from the Coriolis signal is described below. In a typical inertial navigation system, similar pairs of accelerometers would be mounted with their sensitive axes in the X and Y directions, and world be vibrated along the Z and X directions, respectively.

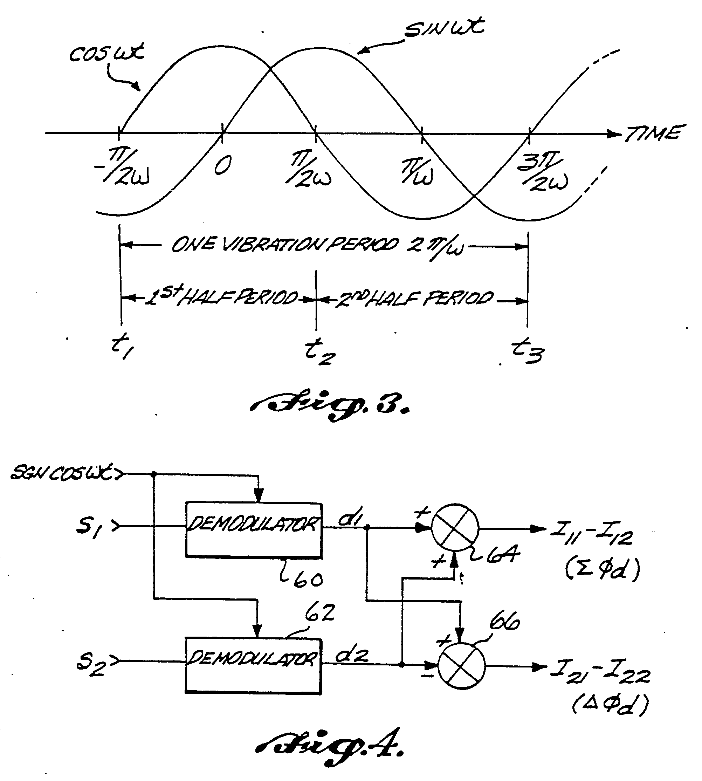

Referring now to FIGURE 2, accelerometer 10 may comprise a conventional vibrating beam accelerometer that includes proof mass 40, force sensing element 42, drive circuit 44 and support 46. The force sensing element preferably comprises a quartz crystal having a double-ended tuning fork construction, as illustrated in U.S. Patent No. 4,215,570. Drive circuit 44 causes the force sensing element to vibrate at a particular resonant frequency $f_1$, and the output of drive circuit 44 is a signal $S_1$ at such frequency. Proof mass 40 is mounted to support 46 by flexure hinge 48, the flexure hinge permitting motion of the proof mass about an axis that passes through the flexure hinge and that is perpendicular to the plane of the drawing in FIGURE 2. Force sensing element 42 is aligned parallel to the Z axis, and has one end attached to support 46 and a second end attached to proof mass 40. The proof mass is thereby suspended at one end by the flexure hinge and at its other end by the force sensing element.

Accelerometer 12 is essentially a mirror image accelerometer 10, and includes proof mass 50, force sensing element 52, drive circuit 54, support 56, and flexure hinge 58. Drive circuit 54 causes force sensing element 52 to vibrate at a particular resonant frequency $f_2$, and produces an output signal $S_2$ at such frequency. An acceleration along the Z axis causes each proof mass to exert a tension or compression force on its respective force sensing element that causes the resonant frequency of the force sensing element to increase or decrease. Each force sensing element therefore operates as a force-to-frequency converter that frequency modulates an acceleration signal onto a carrier signal, the carrier signal being the zero acceleration resonant frequency of the force sensing element. In the arrangement shown in FIGURE 2, the force sensing axis of the accelerometers are antiparallel, i.e., directed in opposite directions from one another, and a given acceleration along the Z axis will result in a compression force on one force sensing element and a tension force on the other force sensing element. The frequencies $f_1$ and $f_2$ will therefore change in opposite directions in response to a given linear acceleration along the Z axis.

Referring again to FIGURE 1, assume that accelerometers 10 and 12 are each sinusoidally vibrated along the Y axis with amplitude $\rho$ and angular frequency $\omega$. The total acceleration $a_1$ sensed by accelerometer 10 is given by :

$$a_1 = A_z + 2\, \rho\Omega_x\, \omega\, \cos\, \omega t \quad (3)$$

where $A_z$ is the linear acceleration along the Z axis, and where the second term represents the Coriolis acceleration experienced by accelerometer 10 as a result of rotation about the X axis at angular rate $\Omega_x$ and vibration along the Y axis with amplitude $\rho$ and angular frequency $\omega$. It is assumed in Equation (3) that the motion of accelerometer 10 along the Y axis is synchronous with sin $\omega t$, i.e., the accelerometer is at its vibrational midpoint at $t = 0$. The Coriolis acceleration is proportional to velocity, and therefore to cost $\omega t$. The acceleration sensed by accelerometer 12 will be :

$$a_2 = - A_z + 2\, \rho\Omega_x\, \omega\, \cos\, \omega t \quad (4)$$

The linear acceleration terms in Equations (3) and (4) have opposite signs due to the opposite directions of sensitive axes 16 and 18. The Coriolis terms for accelerometers 10 and 12 have the same sign because both the sensitive axes and vibrational motion of the accelerometers are both opposite to one another, thereby producing Coriolis accelerations in the same direction relative to the respective sensitive axes.

The operation of each accelerometer as a force-to-frequency converter can be expressed as :

$$f_1 = f_{01} + k_{11}\, (a_1 + k_{21}\, a_1{}^2) \quad (5)$$

$$f_2 = f_{02} + k_{12}\, (a_2 + k_{22}\, a_2{}^2) \quad (6)$$

where $f_{01}$ and $f_{02}$ are the zero load frequencies of accelerometer output signals $S_1$ and $S_2$, respectively, and wherein $k_{11}$, $k_{12}$, $k_{21}$, and $k_{22}$ are constants. Combining Equations (3) and (4) with Equations (5) and (6), one obtains :

$$f_1 = f_{01} + k_{11} (A_z + 2\Omega_x \, p\omega \cos \omega t) + k_{11} k_{21} (A_z{}^2 + 4A_z\Omega_x \, p\omega \cos \omega t + 4\Omega_x{}^2 \, p^2 \, \omega^2 \cos^2 \omega t) \quad (7)$$

$$f_2 = f_{02} + k_{12} (- A_z + 2\Omega_x \, p\omega \cos \omega t) + k_{12} k_{22} (A_z{}^2 - 4A_z\Omega_x \, p\omega \cos \omega t + 4\Omega_x{}^2 \, p^2 \, \omega^2 \cos^2 \omega t) \quad (8)$$

Equations (7) and (8) may be converted to a more useful form by defining the following four integrals :

$$I_{11} = \int_{t_1}^{t_2} (f_1 + f_2) \, dt \qquad (9)$$

$$I_{12} = \int_{t_2}^{t_3} (f_1 + f_2) \, dt \qquad (10)$$

$$I_{21} = \int_{t_1}^{t_2} (f_1 - f_2) \, dt \qquad (11)$$

$$I_{22} = \int_{t_2}^{t_3} (f_1 - f_2) \, dt \qquad (12)$$

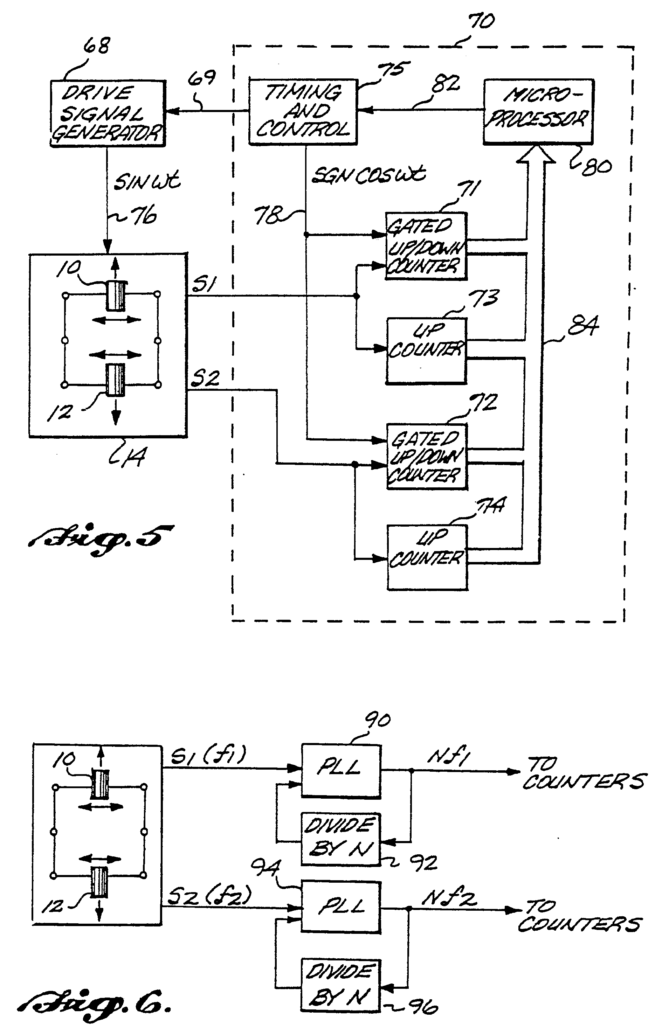

The times $t_1$, $t_2$ and $t_3$ may be selected in a manner illustrated in FIGURE 3. In FIGURE 3, the functions $\sin \omega t$ and $\cos \omega t$ are shown as a function of time over one vibration period $2 \pi/\omega$. As indicated, the time interval $t_1$ through $t_3$ spans the complete vibration period, the time interval $t_1$ through $t_2$ spans the one-half of the vibration period in which the function $\cos \omega t$ has one polarity (e.g., positive), and the time interval $t_2$ through $t_3$ spans the other one-half of the vibration period in which the function $\cos \omega t$ has the opposite polarity. Thus in this example, specific values for the times $t_1$, $t_2$ and $t_3$ are $- \pi/2\omega$, $+ \pi/2\omega$ and $3\pi/2\omega$, respectively. It will be appreciated that other integrals and time limits may be used with equal effect, so long as one integral or set of integrals covers the half of one or more complete vibration periods in which the function $\cos \omega t$ has one polarity, while a second integral or set of integrals covers the other half of such vibration period or periods in which $\cos \omega t$ has the opposite polarity.

By combining Equations (7)-(12), one obtains :

$$I_{11} = A_1 + B_1 A_z + C_1 A_z{}^2 + D_1\Omega_x + E_1 A_z\Omega_x + G_1\Omega_x{}^2 \quad (13)$$

$$I_{12} = A_1 + B_1 A_z + C_1 A_z{}^2 - D_1\Omega_x - E_1 A_z\Omega_x + G_1\Omega_x{}^2 \quad (14)$$

$$I_{21} = A_2 + B_2 A_z + C_2 A_z{}^2 + D_2\Omega_x + E_2 A_z\Omega_x + G_2\Omega_x{}^2 \quad (15)$$

$$I_{22} = A_2 + B_2 A_z + C_2 A_z{}^2 - D_2\Omega_x - E_2 A_z\Omega_x + G_2\Omega_x{}^2 \quad (16)$$

in which :

$$A_1 = \frac{\pi}{\omega}(f_{01} + f_{02}) \quad (17)$$

$$A_2 = \frac{\pi}{\omega}(f_{01} - f_{02}) \quad (18)$$

$$B_1 = \frac{\pi}{\omega}(k_{11} - k_{12}) \quad (19)$$

$$B_2 = \frac{\pi}{\omega}(k_{11} + k_{12}) \quad (20)$$

$$C_1 = \frac{\pi}{\omega}(k_{11}\,k_{21} + k_{12}\,k_{22}) \quad (21)$$

$$C_2 = \frac{\pi}{\omega}(k_{11}\,k_{21} - k_{12}\,k_{22}) \quad (22)$$

$$D_1 = 4\rho(k_{11} + k_{12}) \quad (23)$$

$$D_2 = 4\rho(k_{11} - k_{12}) \quad (24)$$

$$E_1 = 8\rho(k_{11}\,k_{21} - k_{12}\,k_{22}) \quad (25)$$

$$E_2 = 8\rho(k_{11}\,k_{21} + k_{12}\,k_{22}) \quad (26)$$

$$G_1 = 2\rho^2\,\pi\omega(k_{11}\,k_{21} + k_{12}\,k_{22}) \quad (27)$$

$$G_2 = 2\rho^2\,\pi\omega(k_{11}\,k_{21} - k_{12}\,k_{22}) \quad (28)$$

By combining Equations (9)-(12) and (13)-(16), one obtains :

$$I_{11} - I_{12} = 2D_1\Omega_x + 2E_1\,A_z\Omega_x \quad (29)$$

$$I_{21} - I_{22} = 2D_2\Omega_x + 2E_2\,A_z\Omega_x \quad (30)$$

which can be combined to produce :

$$\cdot\Omega_x = \frac{(I_{11} - I_{12}) - (I_{21} - I_{22})\dfrac{E_1}{E_2}}{2\,D_1\left(1 - \dfrac{D_2\,E_1}{D_1\,E_2}\right)} \tag{31}$$

The angular rate $\Omega_x$ may be converted to an angular change about the X axis $\Delta\theta_x$ over one vibration period as follows :

$$\Delta\theta_X = \Omega_x \cdot \frac{2\pi}{\omega} \tag{32}$$

From Equations (9) and (10), the integral expressions $I_{11} - I_{12}$ and $I_{21} - I_{22}$ in Equation (31) are :

$$I_{11} - I_{12} = \left[\int_{t_1}^{t_2} f_1\,dt - \int_{t_2}^{t_3} f_1\,dt\right] + \left[\int_{t_1}^{t_2} f_2\,dt - \int_{t_2}^{t_3} f_2\,dt\right] \tag{33}$$

$$I_{21} - I_{22} = \left[\int_{t_1}^{t_2} f_1\,dt - \int_{t_2}^{t_3} f_1\,dt\right] - \left[\int_{t_1}^{t_2} f_2\,dt - \int_{t_2}^{t_3} f_2\,dt\right] \tag{34}$$

The integral of the frequency of a signal over a predetermined time period is equal to the phase change of the signal over such time period. The first bracketed term in Equation (33) can therefore be seen to be equal to the phase change of signal $S_1$ over one-half of a vibration period minus the phase change of the same signal over the second half of the vibration period. The second bracketed term in Equation (33) is a similar expression for signal $S_2$. The same two bracketed terms appear in Equation (34), except that in Equation (34) the bracketed term for $f_2$ is subtracted from the bracketed term for $f_1$.

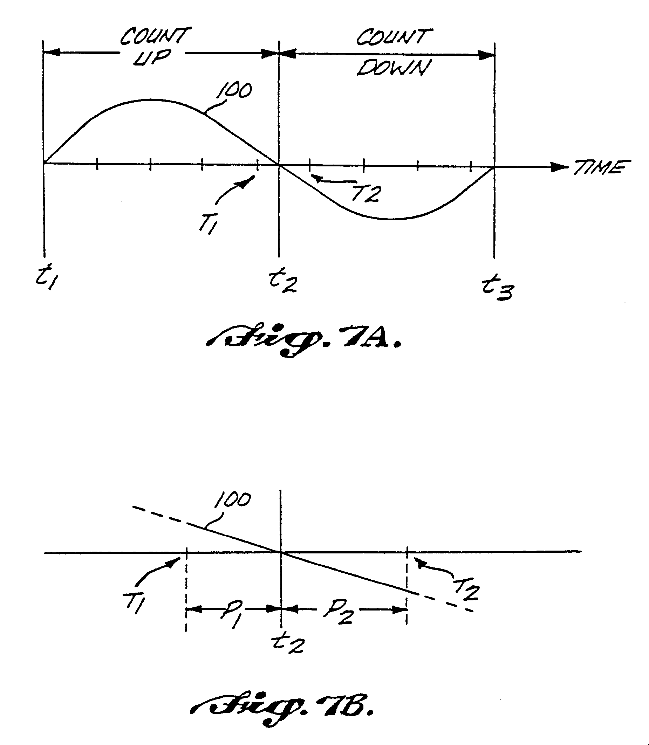

Determination of the quantities $(I_{11} - I_{12})$ and $(I_{21} - I_{22})$ is conceptually illustrated in FIGURE 4. Given the definition of times $t_1$, $t_2$ and $t_3$, each bracketed term in Equations (33) and (34) corresponds to the respective function $f_1$ or $f_2$ demodulated by the function SGN cos $\omega t$, where SGN represents "sign of". In FIGURE 4, signals $S_1$ and $S_2$ are shown being demodulated with the function SGN cos $\omega t$ by demodulators 60 and 62, respectively. The resultant demodulated signals $d_1$ and $d_2$ correspond to the bracketed expressions in Equations (33) and (34), and these signals are input to summing junctions 64 and 66. Summing junction 64 adds signals $d_1$ and $d_2$ to produce the quantity $I_{11} - I_{12}$ of Equation (33), and summing junction 66 subtracts the signals $d_1$ and $d_2$ to produce the quantity $I_{21} - I_{22}$ of Equation (34). The quantity $I_{11} - I_{12}$ is equal to the sum of the phase changes of the demodulated signals $d_1$ and $d_2$ over one vibration period, and can therefore be designated as a phase change sum $\Sigma\phi_d$, where the subscript d indicates that the phase refers to the phases of the demodulated signals $d_1$ and $d_2$. The quantity $I_{21}-I_{22}$ can be designated as a phase change difference $\Delta\phi_d$, where again the subscript d indicates that the phases are those of the demodulated signals $d_1$ and $d_2$. It is therefore possible to rewrite Equation (32) as :

$$\Delta\theta_x = a[\Sigma\phi_d + b\Delta\phi_d] \tag{35}$$

where $\Sigma\phi_d$ and $\Delta\phi_d$ are as defined above, and a and b are constants.

A derivation similar to that set forth above may be used to determine linear acceleration $A_z$ and velocity change $\Delta V_z$ during one vibration period as follows :

$$\Delta V_z = \frac{2\pi}{\omega} \bullet A_z = \frac{2\pi}{\omega} \bullet \frac{(I_{21} + I_{22} - 2A_2) - (I_{11} + I_{12} - 2A_1)\frac{C_2}{C_1}}{2B_2 \left(1 - \frac{B_1 C_2}{B_2 C_1}\right)} \qquad (36)$$

where the integral expressions $I_{11} + I_{12}$ and $I_{21} + I_{22}$ are as follows :

$$I_{11} + I_{12} = \int_{t_1}^{t_3} f_1 \, dt + \int_{t_1}^{t_3} f_2 \, dt \qquad (37)$$

$$I_{21} + I_{22} = \int_{t_1}^{t_3} f_1 \, dt - \int_{t_1}^{t_3} f_2 \, dt \qquad (38)$$

Each integral in Equations (37) and (38) is the phase change of one of the accelerometer output signals $S_1$ or $S_2$ over a full vibration period. The expression $I_{11} + I_{12}$ therefore represents the sum of the phase changes of the output signals over a vibration period, while the expression $I_{21} + I_{22}$ represents the difference in the phase changes of the output signals over one vibration period. Designating the phase difference and phase sum by $\Delta\phi$ and $\Sigma\phi$ respectively, Equation (36) may be rewritten as :

$$\Delta V_z = A[\Delta\phi + FT + B\Sigma\phi] \qquad (39)$$

where $\Delta\phi$ and $\Sigma\phi$ here refer to the output signals $S_1$ and $S_2$ themselves rather than to the demodulated output signals $d_1$ and $d_2$, where T is one vibration period, and where A, F and B are constants. Equation (39) has application beyond angular rate sensors, and is usable with any frequency output accelerometers arranged in a push-pull configuration, as described in U.S. Patent 4 712 427 published 15.12.87.

Equations (31) through (39) may be implemented by the system illustrated in FIGURE 5. The system includes drive signal generator 68 and data processor 70, data processor 70 comprising timing and control circuit 75, gated up/down counters 71 and 72, up counters 73 and 74, and microprocessor 80. Timing and control circuit 75 generates timing signals on line 69 that serve to define the vibration period $2\pi/\omega$, the timing signals being derived from a clock within microprocessor 80 via line 82. Such timing signals are received by drive signal generator 68, and used by the drive signal generator to produce a sinusoidal drive signal sin $\omega t$ on line 76. The drive signal on line 76 is received by accelerometer assembly 14 that includes accelerometers 10 and 12, and causes the accelerometers to sinusoidally vibrate along the Y axis with an angular frequency $\omega$ and amplitude p. Suitable means for converting the drive signal sin $\omega t$ into vibrational movement of accelerometers 10 and 12 are described in the above-referenced U.S. Patent No. 4,510,802.

The accelerometer output signals $S_1$ and $S_2$ have frequencies $f_1$ and $f_2$ repectively that correspond to the total accelerations experienced by each accelerometer. Up counter 73 counts cycles of signal $S_1$ from accelerometer 10. Each cycle corresponds to a phase change of $2\pi$ in the $S_1$ signal. The count accumulated by up counter 73 during one vibration period $2\pi/\omega$ (or during a period comprising a plurality of complete vibration periods) will therefore correspond to the total phase change of signal $S_1$ over such period. Since phase change is the integral of frequency over time, the count stored in up counter 73 corresponds to the first integral in Equations (37) and (38).

Gated up/down counter 71 receives signal $S_1$, as well as a gate signal from timing and control circuit 75 via line 78. The gate signal may be any signal representing the function SGN cos $\omega t$. For example, the gate signal could be positive during a first half cycle from $t_1$ to $t_2$ ($-\pi/2\omega$ to $\pi/2\omega$), and negative during a second half cycle from $t_2$ to $t_3$ ($\pi/2\omega$ to $3\pi/2\omega$). Gated up/down counter 71 responds to the gate signal by counting the cycles of signal $S_1$ in one direction (e.g., up) during the first half cycle and in the opposite direction (e.g., down) during the succeeding half cycle. The count stored by gated up/down counter 71 therefore corresponds to the first bracketed term in Equations (33) and (34). Up counter 74 counts cycles of signal $S_2$ from accelerometer 12, and the count accumulated by up counter 74 during one vibration period corresponds to the total phase change

of signal $S_2$ over such period. The count stored by up counter 74 therefore corresponds to the second integrals in Equations (37) and (38). Gated up/down counter 72 receives signal $S_2$ as well as the gate signal on line 78. Gated up/down counter 72 counts cycles of signal $S_2$ alternately up and down during successive half cycles of the vibration period. The count stored by gated up/down counter 72 therefore corresponds to the second bracketed term in Equations (33) and (34). The output of these counters are input to microprocessor 80 via bus 84, and the microprocessor periodically determines the accumulated counts and determines angular change $\Delta\phi_x$ and velocity change $\Delta V_z$ as per Equations (35) and (39).

If counters 73 and 74 are allowed to accumulate counts indefinitely, the possibility of overflow arises. This problem can be avoided by having the counters reset periodically as their accumulated counts are transferred to microprocessor 80. The acumulated counts from counters 73 and 74 are then used by the microprocessor to determine $\Delta\phi$ and $\Sigma\phi$ of Equation (39). Although the quantity $\Sigma\psi$ would in principle be subject to overflow within microprocessor 80, such overflow may be prevented by periodically calculating and storing the quantity $FT + B\Sigma\phi$. This latter quantity is inherently limited in magnitude, since it represents a linearity correction to the velocity change represented by $A\Delta\phi$.

It should be understood that techniques other than the up/down counters shown in FIGURE 5 could be employed to perform the demodulation function represented by demodulators 60 and 62 of FIGURE 4. For example, microprocessor 80 could sample the contents of up counters 71 and 73 at least twice during each vibration period, and subtract the count of the second sample in each period from the count of the first sample in that period. In this case, the reference signal representing SGN cos $\omega t$ is internal to the microprocessor, and is used by the microprocessor to determine the sampling times.

There are many applications where the system shown in FIGURE 5 would be suitable, not only to demodulate a Coriolis signal from a linear acceleration signal, but wherever an FM signal contains information that is modulated synchronously (i.e., in phase) with respect to a reference signal whose frequency is much lower than the FM carrier. However, for certain applications, the system shown in FIGURE 5 has a limited resolution, which may be seen by noting that for a typical inertial navigation system, the vibration frequency may be 100 Hz and the frequencies $f_1$ and $f_2$ may be on the order of 40 kHz. Thus there are only about 400 cycles of signals $S_1$ and $S_2$ in one vibration period. If full scale corresponds to a 10% frequency shift in signals $S_1$ and $S_2$, then the pulse difference over one vibration period cannot be more than about 6% of 400 cycles, or 24 cycles. Thus, over a single vibration period, a one cycle differential indicates a rate of 4% full scale. Assuming that signals $S_1$ and $S_2$ are not synchronous with the vibration period, this resolution can be improved by accumulating counts over sufficiently large time periods. However, if full scale for the rotation rate is 200° per second, then a rotation rate of 1° per hour will require over 1000 vibration periods for one net pulse, i.e., one net count in the gated up/down counters. If the vibration frequency is 100 cycles per second, the time period required to measure to an accuracy of 1° per hour is therefore about 30 seconds.

The source of the resolution problem is that the system shown in FIGURE 5 only measures phase change in increments of $2\pi$. One hardware based technique to improve the resolution is to increase the frequencies of signals $S_1$ and $S_2$ using phase lock loops, as indicated in FIGURE 6. Phase lock loop 90 receives signal $S_1$, and the output of the phase lock loop is passed through a divide by N circuit 92 and then fed back to the voltage control oscillator input of the phase lock loop. The output signal from phase lock loop 90 will thus be a signal having a frequency N $f_1$ for an input frequency of $f_1$. In a similar manner, phase lock loop 94 and divide by N circuit 96 are used to convert signal $S_2$ to a signal having a frequency of N $f_2$. This technique will in general increase the accuracy of the phase determinations by a factor of N. Stability requires that the corner frequency of the voltage control oscillator servo system be much less than the input frequencies $f_1$ and $f_2$, while accuracy requires that it be greater than the vibration frequency $\omega$. Since these two frequencies typically differ by a factor of 400, these conditions in general will be easily met.

A software based approach to increasing resolution is schematically illustrated in FIGURES 7A and 7B. In FIGURE 7A, curve 100 represents the vibration velocity of accelerometers 10 and 12, i.e., the cos $\omega t$ Coriolis acceleration terms in Equations (3) and (4). FIGURE 7A illustrates one vibration period extending from time $t_1$ to time $t_3$. As described above, gated up/down counters 71 and 72 are adapted to count up during one-half of the vibration period, for example from time $t_1$ to time $t_2$, and then to count down for the subsequent half of the vibration period from time $t_2$ to time $t_3$. The marks along the time axis in FIGURE 7A represent full cycles of one of the output signals (e.g., signal $S_1$), the frequency $f_1$ of such output signal with respect to the vibration frequency $\omega$ being decreased for ease of illustration. Ideally, the times $t_1$, $t_2$ and $t_3$ would each correspond to the end of an $S_1$ cycle. If such were the case, then there would be no loss of resolution in counting only full cycles of the $S_1$ signal. However, the frequencies $f_1$ and $f_2$ of signals $S_1$ and $S_2$ are in general continuously varying, and therefore cannot be made synchronous with the vibration frequency. As illustrated in FIGURE 7A, the result is that the first half of a vibration period will end between two full cycles of the $S_1$ signal, e.g., between times $T_1$ and $T_2$, as illustrated in the expanded view of FIGURE 7B. The problem can be viewed as one of deter-

9

mining the fraction of the $S_1$ cycle that occurs during time period $P_1$ from time $T_1$ to the end of the first half of the vibration period at time $t_2$, and the corresponding fraction of the $S_1$ cycle that occurs during time period $P_2$ from time $t_2$ to time $T_2$. Since the fraction of a vibration period occupied by one cycle of signals $S_1$ (or $S_2$) is comparatively small, the phase change during such output signal period can be considered a linear function of time, to an excellent approximation. The fractions of a cycle that occur during time periods $P_1$ and $P_2$ can therefore be established by linear interpolation using a high-frequency clock as a reference. Such a high-frequency clock would measure time periods $P_1$ and $P_2$, and add the resulting fractional counts to the integer number of counts accumulated in the corresponding counters. The improvement in resolution is the ratio of the clock frequency to the frequency of signals $S_1$ and $S_2$. For output signal frequencies in the range of 40 kHz, a 6 MHz clock will therefore produce a resolution improvement of approximately 150 to 1.

The technique described above for separating a Coriolis signal from a linear acceleration signal can be applied to the case wherein only a single accelerometer is vibrated along a given axis. For such a system, derivation similar to that outlined above for the dual accelerometer case results in the following expression for $\Omega_x$:

$$\Omega_x = \frac{1}{8 \rho k_1 (1 + 2 k_2 A_z)} \left[ \int_{t_1}^{t_2} f \, dt - \int_{t_2}^{t_3} f \, dt \right] \tag{40}$$

where f represents the frequency of the single accelerometer output signal, and where $k_1$ and $k_2$ correspond to $k_{11}$ and $k_{21}$ of Equation (5) above. In this implementation, the angular rate $\Omega_x$ can be extracted from the accelerometer output alone only if $k_2$ is very small compared to linear acceleration term $A_z$. However, if $A_z$ were available, such as from a nonvibrating accelerometer, an Equation (39) above could be used to determine angular rate. Suitable techniques for vibrating a single accelerometer along a vibration axis are described in above-referenced U.S. Patent Application, Serial No. 528,776, filed September 2, 1983.

If Equations (3) and (4) are amended to include a term proportional to sin $\omega$t, in addition to the Coriolis term $2\rho\Omega_x w \cos \omega t$, the result in Equation (31) is unaltered. This shows that the technique described herein is not affected by error terms related to sin $\omega$t, such as those described in U.S. Patent No. 4,445,376. In particular, the technique can be used to separate a periodic information signal that is in phase with a reference signal, not only from a signal that is constant over one integration cycle, but also from another periodic signal that is in quadrature phase with respect to the information signal. Conversely, the quadrature signal alone can be demodulated merely by shifting the reference signal one-quarter cycle with respect to the information signal. This capability provides a means for accomplishing the phase and alignment calibration function described in U.S. Patent No. 4,510,802, as well as the automatic nulling function described in U.S. Patent 4 665 748 published 19.5.87.

While the preferred embodiments of the invention have been illustrated and described, it should be understood that variations will be apparent to those skilled in the art. Accordingly, the invention is not to be limited to the specific embodiments illustrated and described, and the true scope of the invention is to be determined by reference to the following claims.

## Claims

1. A system for determining the angular rate of rotation of a body about a rate axis, the system comprising: at least one accelerometer (10) having its sensitive axis parallel to a sensing axis (16) perpendicular to the rate axis, the accelerometer including means for producing an output signal $(a_1)$ having a frequency corresponding to the acceleration experienced by the accelerometer along its sensitive axis ;

movement means including means (68) for producing a periodic movement signal and means (14) responsive to the movement signal for periodically moving the accelerometer along a movement axis perpendicular to the rate and sensing axes, whereby the output signal includes a periodic Coriolis component ; and processing means comprising

means (75) for producing a reference signal that is operative to define one or more first time periods during which the Coriolis component as one polarity and one or more second time periods during wich the Coriolis component has the opposite polarity, the first and second time periods together comprising one or more complete periods of the movement signal,

means (71) for determining, for the output signal, a phase value representing the difference between the phase change of the output signal during the first time periods and the phase change of the output signal during the second time periods,

means for improving the resolution of the phase value determination comprising means for generating a high frequency clock signal, and counter means for counting cycles of the clock signal during fractions of a cycle of an output signal which overlaps the first and second time periods thereby to improve the resolution of the determination of phase values, and

means (80) for determining from the phase values a value representing the angular rate of rotation of the body about the rate axis.

2. A system according to claim 1, comprising the first and second accelerometers (10, 12) having their sensitive axes (16,18) parallel to a sensing axis perpendicular to the rate axis, the first and second accelerometers being adapted to produce respective first and second output signals ($a_1$, $a_2$), each output signal having a frequency corresponding to the acceleration experienced by the respective accelerometer along its sensitive axis.

3. A system according to claim 2, wherein the processing means further comprises means for adding the phase values to one another to determine a phase sum value and for subtracting the phase values from one another to determine a phase difference value, and the angular rate value determining means (80) comprises means for linearly combining the phase sum and phase difference values to determine the value representing the angular rate of rotation of the body about the rate axis.

4. A system according to claim 2 or claim 3, wherein the phase value determining means (71) comprises means (71, 72) for determining, for each output signal, a first phase value representing the difference between the phase change of the output signal during the first time periods and the phase change of the output signal during the second time periods, and a second phase value representing the phase change of the output signal during the complete period of the movement signal, and the angular rate value determining means (80) comprises means for determining from the phase values a first output value representing the angular rate of rotation of the body about the rate axis, and a second output value representing the linear acceleration of the body along the sensing axis.

5. A system according to any of claims 2 to 4, wherein the means for determining the phase values comprise first and second counter means (71, 72) connected to receive the first and second output signals respectively, each counter means being operative to determine the difference between the cycles of the respective output signal that occur during the first time periods and the cycles of the respective output signal that occur during the second time periods.

6. A system according to any of claims 2 to 4 wherein the means for determining the phase values comprise counter means for counting cycles of each output signal and data processing means for obtaining samples of the contents of the counter means at least twice during each movement period and for algebraically combining the samples to determine the phase values.

7. A system according to any of claims 2 to 5, wherein the processing means comprises frequency multiplication means for multiplying the frequency of each output signal by a predetermined number to thereby improve the resolution of the determination of phase values.

8. A system according to any of claims 2 to 6, wherein the movement means includes a parallelogram mechanism (14) including a first support member (20) secured to the first accelerometer (10), a second support member (22) secured to the second accelerometer (12), a linkage mechanism (24, 26) attached to the first and second support members and secured to the body such that the first and second support members are parallel to the movement axis and such that the sensitive axes of the first and second accelorometers are parallel to the sensing axis ; and wherein the periodic movement signal of the movement means is a sinusoidal signal and the means responsive to the movement signal is effective to vibrate the parallelogram mechanism such that the accelerometers are sinusoidally vibrated along a movement axis perpendicular to the rate and sensing axes, whereby each output signal includes a sinusoidal Coriolis component.

9. A system according to claim 8, wherein the sensitive axes of the first and second accelerometers are oriented in opposite directions from one another.

10. A system according to claim 9, wherein the processing means includes means for adding the phase values to one another to determine a phase sum value and for subtracting the phase values from one another to determine a phase difference value, and means for linearly combining the phase sum and phase difference values to determine said value representing angular rate.

**Ansprüche**

1. System zur Bestimmung der Winkelrotationsgeschwindigkeit eines Körpers um eine Rotationssachse mit

mindestens einem Beschleunigungsmesser (10), dessen Empfindlichkeitsachse parallel zu einer zur Rotationsachse lotrechten Fühlachse (16) verläuft, wobei der Beschleunigungsmesser Mittel zur Erzeugung eines Ausgangssignals (a₁) enthält, dessen Frequenz der vom Beschleunigungsmesser entlang seiner Empfindlichkeitsachse gemessenen Beschleunigung entspricht;

einer Bewegungsvorrichtung mit einem Organ (68) zur Erzeugung eines periodischen Bewegungssignals und einem auf das periodische Bewegungssignal ansprechende Organ (14), wobei die Bewegungsvorrichtung den Beschleunigungsmesser periodisch entlang einer zur Rotations- und Fühlachse lotrechten Bewegungsachse bewegt, und wobei das Ausgangssignal eine periodische Coriolis-Komponente enthält; und

einer Verarbeitungsvorrichtung, bestehend aus einem ein Bezugssignal erzeugenden Organ (75), das einen oder mehrere erste Zeiträume, während der die Coriolis-Komponente eine Polarität aufweist, und einen oder mehrere zweite Zeiträume, während der die Coriolis-Komponente die entgegengesetzte Polarität aufweist, festlegt, wobei die ersten und zweiten Zeiträume zusammen einen oder mehrere komplette Zeiträume des Bewegungssignals ausmachen,

einem Organ (71) zur Bestimmung eines Phasenwertes für das Ausgangssignal, wobei der Phasenwert der Differenz zwischen Phasenänderung des Ausgangssignals während der ersten Zeiträume und Phasenänderung des Ausgangssignals während der zweiten Zeiträume entspricht,

einem Organ zur Verbesserung der Auflösung der Phasenwertbestimmung, welches ein Mittel zur Erzeugung eines Hochfreqenz-Uhrensignals und ein Zählmittel zum Zählen der Uhrensignalzyklen innerhalb von Bruchteilen eines eines Ausgangssignalzyklus enthält, der zur Verbesserung der Auflösung der Phasenwertbestimmung die ersten und zweiten Zeiträume überlappt, und

einem Organ (80), mit dem aus den Phasenwerten ein Wert bestimmt wird, der der Winkelrotationsgeschwindigkeit des Körpers um die Rotationsachse entspricht.

2. System gemäß Anspruch 1 mit erstem und zweitem Beschleunigungsmesser (10, 12), deren Empfindlichkeitsachsen (16, 18) parallel zu einer zur Rotationsachse lotrechten Fühlachse verlaufen, wobei die Beschleunigungsmesser jeweils auf die Erzeugung erster bzw. zweiter Ausgangssignale (a₁, a₂) eingerichtet sind, die jeweils eine Frequenz aufweisen, die der Beschleunigung entspricht, die der jeweilige Beschleunigungsmesser entlang seiner Empfindlichkeitsachse mißt.

3. System gemäß Anspruch 2, bei dem die Verarbeitungsvorrichtung weiter Organe enthält, die die Phasenwerte zum Erhalt eines Phasensummenwertes zusammenaddieren und zum Erhalt eines Phasendifferenzwertes voneinander subtrahieren, und das Organ (80) zur Bestimmung des Winkelgeschwindigkeitswertes Mittel enthält, mit dem die Phasensummen- und Phasendifferenzwerte linear kombiniert werden, um den Wert zu bestimmen, der der Winkelrotationsgeschwindigkeit des Körpers um die Rotationsachse entspricht.

4. System gemäß Anspruch 2 oder Anspruch 3, bei dem das Phasenwertbestimmungsorgan (71) Mittel (71, 72) enthält, mit denen für jedes Ausgangssignal ein erster Phasenwert, der der Differenz zwischen der Phaseränderung des Ausgangssignals während der ersten Zeiträume und der Phasenänderung des Ausgangssignals während der zweiten Zeiträume entspricht, und ein zweiter Phasenwert bestimmt wird, der der Phasenänderung des Ausgangssignals während des kompletten Zeitraums des Bewegungssignals entspricht, und das Organ (80) zur Bestimmung des Winkelgeschwindigkeitswertes Mittel enthält, mit denen aus den Phasenwerten ein erster Ausgangswert, der der Winkelrotationsgeschwindigkeit des Körpers um die Geschwindigkeitsachse entspricht, und ein zweiter Ausgangswert bestimmt wird, der der linearen Beschleunigung des Körpers entlang der Fühlachse entspricht.

5. System gemäß einem der Ansprüche 2 bis 4, bei dem die Mittel zur Bestimmung der Phasenwerte aus zwei Zählern (71, 72) bestehen, die jeweils das erste bzw. zweite Ausgangssignal empfangen und darauf eingerichtet sind, die Differenz zwischen den Zyklen des jeweiligen, während der ersten Zeiträume auftretenden Ausgangssignals und den Zyklen des jeweiligen, während der zweiten Zeiträume auftretenden Ausgangssignals zu bestimmen.

6. System gemäß einem der Ansprüche 2 bis 4, bei dem die Mittel zur Bestimmung der Phasenwerte aus Zählern zum Zählen der Zyklen jedes Ausgangssignals sowie einem Datenverarbeitungsmittel bestehen, mit dem mindestens zweimal innerhalb jedes Bewegungszeitraums Probewerte des Zählerinhalts entnommen und zur Bestimmung der Phasenwerte mit den Probewerten algebraisch kombiniert werden.

7. System gemäß einem der Ansprüche 2 bis 5, bei dem das Datenverarbeitungsmittel Freqenzmultiplikationsmittel enthält, mit dem zur Verbesserung der Auflösung der Phasenwertbestimmung jedes Ausgangssignal mit einer vorbestimmten Zahl multipliziert wird.

8. System gemäß einem der Ansprüche 2 bis 6, bei dem das Bewegungsorgan einen Parallelogrammechanismus (14) mit einem am ersten Beschleunigungsmesser (10) befestigten ersten Stützglied (20), einem am zweiten Beschleunigungsmesser (12) befestigten zweiten Stützglied (22), und einem am ersten und zweiten Stützglied befestigten Gestängemechanismus (24, 26) enthält, welch letzterer am Körper befestigt ist, derart, daß die beiden Stützglieder parallel zur Bewegungsachse verlaufen, und derart, daß die Empfindlichkeitsachsen der beiden Beschleunigungsmesser parallel zur Fühlachse verlaufen; und bei dem das periodische Bewegungssignal des Bewegungsorgans ein sinusförmiges Signal ist, und das auf das Bewegungssignal ansprechende Mittel die Vibration des Parallelogrammechanismus bewirkt, derart, daß die Beschleunigungsmesser sinusförmig entlang einer zur Rotations- und Fühlachse lotrechten Bewegungsachse in Schwingungen versetzt werden, wobei jedes Ausgangssignal eine sinusförmige Coriolis-Komponente enthält.

9. System gemäß Anspruch 8, bei dem die Empfindlichkeitsachsen der beiden Beschleunigungsmesser in entgegengesetzte Richtungen weisen.

10. System gemäß Anspruch 9, bei dem das Datenverarbeitungsmittel Mittel, mit denen die Phasenwerte zum Erhalt eines Phasensummenwertes zusammenaddiert und zum Erhalt eines Phasendifferenzwertes voneinander subtrahiert werden, sowie Mittel aufweist, mit denen zur Bestimmung des besagten, die Winkelgeschwindigkeit darstellenden Wertes die Phasensummen- und Phasendifferenzwerte linear kombiniert werden.


## Revendications

1. Un système pour déterminer la vitesse angulaire de rotation d'un corps autour d'un axe de rotation, le système comprenant :

au moins un accéléromètre (10) dont l'axe sensible est parallèle à un axe de détection (16) perpendiculaire à l'axe de rotation, l'accéléromètre comprenant des moyens destinés à produire un signal de sortie ($a_1$) ayant une fréquence qui correspond à l'accélération que subit l'accéléromètre le long de son axe sensible;

des moyens de déplacement comprenant des moyens (68) destinés à produire un signal de déplacement périodique et des moyens (14) qui réagissent au signal de déplacement en déplaçant périodiquement l'accéléromètre le long d'un axe de déplacement perpendiculaire aux axes de rotation et de détection, grâce à quoi le signal de sortie comprend une composante de Coriolis périodique ; et des moyens de traitement comprenant

des moyens (75) destinés à produire un signal de référence qui définit une ou plusieurs premières périodes au cours desquelles la composante de Coriolis a une polarité, et une ou plusieurs secondes périodes au cours desquelles la composante de Coriolis a la polarité opposée, les première et seconde périodes constituant ensemble une ou plusieurs périodes complètes du signal de déplacement,

des moyens (71) destinés à déterminer à partir du signal de sortie une valeur de phase représentant la différence entre le changement de phase du signal de sortie pendant les premières périodes et le changement de phase du signal de sortie pendant les secondes périodes,

des moyens destinés à améliorer la résolution de la détermination de valeurs de phase, comprenant des moyens pour produire un signal d'horloge de haute fréquence, et des moyens à compteur pour compter des cycles du signal d'horloge pendant des fractions d'un cycle d'un signal de sortie qui chevauche les première et seconde périodes, pour améliorer ainsi la résolution de la détermination de valeurs de phase, et

des moyens (80) destinés à déterminer à partir des valeurs de phase une valeur représentant la vitesse angulaire de rotation du corps autour de l'axe de rotation.

2. Un système selon la revendication 1, dans lequel les premier et second accéléromètres (10, 12) ont leurs axes sensibles (16, 18) parallèles à un axe de détection qui est perpendiculaire à l'axe de rotation, les premier et second accéléromètres étant conçus pour produire des premier et second signaux de sortie respectifs ($a_1$, $a_2$), et chaque signal de sortie ayant une fréquence qui correspond à l'accélération que subit l'accéléromètre respectif dans la direction de son axe sensible.

3. Un système selon la revendication 2, dans lequel les moyens de traitement comprennent en outre des moyens pour additionner l'une à l'autre les valeurs de phase, afin de déterminer une valeur de somme de phase, et pour soustraire l'une de l'autre les valeurs de phase afin de déterminer une valeur de différence de phase, et les moyens de détermination de valeur de vitesse angulaire (80) comprennent des moyens destinés à combiner linéairement les valeurs de somme de phase et de différence de phase, pour déterminer la valeur qui représente la vitesse angulaire de rotation du corps autour de l'axe de rotation.

4. Un système selon la revendication 2 ou 3, dans lequel les moyens de détermination de valeurs de phase (71) comprennent des moyens (71, 72) destinés à déterminer, pour chaque signal de sortie, une première valeur de phase représentant la différence entre le changement de phase du signal de sortie pendant les premières périodes et le changement de phase du signal de sortie pendant les secondes périodes, et une seconde valeur de phase représentant le changement de phase du signal de sortie pendant la période complète du signal de déplacement, et les moyens de détermination de valeur de vitesse angulaire (80) comprennent des moyens qui sont destinés à déterminer à partir des valeurs de phase une première valeur de sortie représentant la vitesse angulaire de rotation du corps autour de l'axe de rotation, et une seconde valeur de sortie représentant l'accélération linéaire du corps dans la direction de l'axe de détection.

5. Un système selon l'une quelconque des revendications 2 à 4, dans lequel les moyens destinés à déterminer les valeurs de phase comprennent des premier et second compteurs (71, 72) connectés pour recevoir respectivement les premier et second signaux de sortie, chaque compteur déterminant la différence entre les cycles du signal de sortie respectif qui ont lieu pendant les premières périodes et les cycles du signal de sortie respectif qui ont lieu pendant les secondes périodes.

6. Un système selon l'une quelconque des revendications 2 à 4, dans lequel les moyens destinés à déterminer les valeurs de phase comprennent des moyens de comptage qui sont destinés à compter des cycles de chaque signal de sortie, et des moyens de traitement de données qui sont destinés à obtenir des échantillons du contenu des moyens de comptage au moins deux fois pendant chaque période de déplacement, et à combiner algébriquement les échantillons pour déterminer les valeurs de phase.

7. Un système selon l'une quelconque des revendications 2 à 5, dans lequel les moyens de traitement comprennent des moyens de multiplication de fréquence pour multiplier la fréquence de chaque signal de sortie par un nombre prédéterminé, afin d'améliorer ainsi la résolution de la détermination des valeurs de phase.

8. Un système selon l'une quelconque des revendications 2 à 6, dans lequel les moyens de déplacement comprennent un mécanisme à parallélogramme (14) qui comprend un premier élément de support (20) fixé au premier accéléromètre (10), un second élément de support (22) fixé au second accéléromètre (12), un mécanisme à biellettes (24, 26) fixé aux premier et second éléments de support et fixé au corps, de façon que les premier et second éléments de support soient parallèles à l'axe de déplacement, et de façon que les axes sensibles des premier et second accéléromètres soient parallèles à l'axe de détection ; et dans lequel le signal de déplacement périodique des moyens de déplacement est un signal sinusoïdal, et les moyens qui réagissent au signal de déplacement font vibrer le mécanisme à parallélogramme de façon que les accéléromètres vibrent d'une manière sinusoïdale dans la direction d'un axe de déplacement qui est perpendiculaire aux axes de rotation et de détection, grâce à quoi chaque signal de sortie comprend une composante de Coriolis sinusoïdale.

9. Un système selon la revendication 8, dans lequel les axes sensibles des premier et second accéléromètres sont orientés dans des directions mutuellement opposées.

10. Un système selon la revendication 9, dans lequel les moyens de traitement comprennent des moyens pour additionner ensemble les valeurs de phase afin de déterminer une valeur de somme de phase, et pour soustraire l'une de l'autre les valeurs de phase afin de déterminer une valeur de différence de phase, et des moyens pour combiner linéairement les valeurs de somme de phase et de différence de phase, pour déterminer la valeur représentant la vitesse angulaire.

*Fig. 1.*

*Fig. 2.*

*Fig. 3.*

*Fig. 4.*

*Fig.5*

*Fig.6.*

Fig. 7A.

Fig. 7B.